# EUROPÄISCHE PATENTSCHRIFT

(11) **EP 2 826 136 B1**
(45) Veröffentlichungstag und Bekanntmachung des Hinweises auf die Patenterteilung: **25.12.2019**
(21) Anmeldenummer: 13715127.0
(22) Anmeldetag: 13.03.2013
(51) Int. Cl.: H02K 15/02, C08G 59/40, H01F 3/02, H01F 41/02

(54) **LAMELLENPAKET UND VERFAHREN ZU SEINER HERSTELLUNG**
STACK OF LAMINATIONS AND METHOD FOR THE PRODUCTION THEREOF
PAQUET DE TÔLES ET PROCÉDÉ POUR LE PRODUIRE

(30) Priorität: 14.03.2012 DE 102012005795
(43) Veröffentlichungstag der Anmeldung: 21.01.2015
(73) Patentinhaber: Kienle + Spiess GmbH, 74343 Sachsenheim (DE)
(72) Erfinder: BLOCHER, Daniel, 86932 Pürgen (DE); BAUER, Steffen, 74374 Zaberfeld (DE); BARDOS, András, 42579 Heiligenhaus (DE)
(74) Vertreter: Jackisch-Kohl, Anna-Katharina
(86) Internationale Anmeldenummer: PCT/EP2013/000742
(87) Internationale Veröffentlichungsnummer: WO 2013/135378

(56) Entgegenhaltungen:
- EP-A2- 0 283 912
- WO-A2-2010/109272
- DE-A1- 2 627 147
- FR-A1- 2 361 767
- FR-A1- 2 888 390
- GB-A- 972 988
- US-A- 3 037 969

## Beschreibung

1. Die Erfindung betrifft ein Verfahren zur Herstellung von Lamellenpaketen nach dem Oberbegriff des Anspruches 1.

2. In elektrischen Maschinen werden häufig Kerne aus gestapelten Lamellen eingesetzt, die aus ausgeschnittenen Elektroblechen hergestellt werden. Üblicherweise wird eine Stanzpresse verwendet, um die einzelnen Lamellen auszuschneiden. Die Herstellung des Kerns oder des Pakets kann auf verschiedene Arten erfolgen, die mechanisches Zusammenfügen der Teile in der Presse zur Bildung von Kernen, Schweißen, Kleben oder mechanisches Fügen der Lamellen zu Paketen außerhalb der Presse einschließt.

### Hintergrund der Erfindung / Stand der Technik

3. Beispiele auf dem Gebiet der Herstellung von Paketen außerhalb von Werkzeug und Presse werden in der DE 24 46 693 angegeben. Diese Druckschrift beschreibt, wie Pakete aus Stahl hergestellt werden, der eine warmaushärtende Beschichtung aufweist. Die EP 0 121 173 beschreibt einen Lösungsansatz, bei dem die Lamellen mit Erhebungen und Vertiefungen versehen sind, mittels derer die Lamellen zum Paket zusammengedrückt werden. Dieses sogenannte Verknüpfungsverfahren ist mit einigen Nachteilen verbunden:
a. Die Verknüpfungstechnik erfordert die Herstellung sehr komplexer Werkzeuge, deren Teile sehr empfindlich hinsichtlich der Werkstoffqualität sind und weniger robust als Werkzeuge sein können, mit denen die Lamellen nicht miteinander verknüpft werden. Dies erhöht sowohl die Kosten als auch die mit dem Verfahren verbundenen Risiken, was die Tauglichkeit erschweren kann.
b. Sehr dünne Stahlbleche, z.B. mit weniger als 0,35 mm Dicke, können nur sehr schwierig verknüpft werden, was zu wenig leistungsfähigen Verfahren führt.
c. Einige Erzeugnisse erfordern eine Drehung jeder Lamelle um einen bestimmten Betrag. Bei einem Paket, dessen Lamellen nicht miteinander verknüpft sind, ist der Drehwinkel durch die Anzahl der vorhandenen Verknüpfungsstellen begrenzt, d.h. bei vier vorhandenen Verknüpfungspunkten ist der kleinstmögliche Drehwinkel 90°.
d. Ein weiterer Nachteil der gegenwärtigen Verknüpfungstechnik liegt darin, dass Werkstoffe unterschiedlicher Dicke oder Eigenschaften (oft durch unterschiedliche Qualitätsbezeichnungen gekennzeichnet) nicht zusammengefügt werden können.

4. Es sind auch andere Techniken versucht worden, die mit einem von außen aufgebrachten Klebstoff arbeiten. Beispiele dafür sind DE 35 35 573 und DE 203 18 993, welche beide ein Verfahren zur Verwendung eines Klebstoffs beschreiben, der auf die Bandoberfläche aufgebracht wird. Die Nutzung kapillaren Klebens, d.h. eine Klebe "naht" die Außenkante des Paketes hinablaufen zu lassen, ist ebenfalls erprobt worden.

Es sind auch Verfahren bekannt (JP 2005 269 732), bei denen auf gestanzte Lamellen ein Klebstoff in Punkt- oder Linienform aufgebracht wird. Der Auftrag des Klebstoffes erfolgt mittels eines Auftragkopfes, der mehrere Düsen enthält.

Bei einem anderen Verfahren (JP 2001 321 850) wird der Klebstoff an vorgegebenen Positionen auf die Lamellen aufgesprüht. Die für den Klebstoffauftrag vorgesehene Auftrageinheit hat ein Verteilerstück mit drei Düsen, aus denen der Klebstoff austritt.

5. Mit den verschiedenen vorhandenen Technologien zum Aufbringen von Klebstoff auf die Bandoberfläche als integrierter Teil der Kernherstellung sind verschiedene Schwierigkeiten verbunden:
a. Die möglichen Pressengeschwindigkeiten sind durch die Geschwindigkeit des Kleberauftrags eingeschränkt. Zum Beispiel werden in DE 203 18 993 Geschwindigkeitsbereiche bis zu 200-300 Hübe pro Minute definiert. Für eine kostengünstige Kernproduktion müssen Pressengeschwindigkeiten bei mindestens 400 Hüben pro Minute liegen, wobei typische Werte von über 600 Hüben pro Minute sehr erwünscht sind.
b. Es ist schwierig, das Werkzeug sauber zu halten. Zum Beispiel ist bei einer der Technologien eine Losgrößengrenze von einigen Tausend Hüben wahrscheinlich, nach denen das Werkzeug gewartet und gereinigt werden muss. Das normale Wartungsintervall für ein Hartmetallwerkzeug liegt bei einem Minimum von 2 000 000 Schlägen. Verkürzte Laufzeiten treiben die Produktionskosten deutlich in die Höhe.
c. Bestehende Systeme wie in DE 20 31 899 sind dafür bekannt, Probleme mit dem Verschleiß von Bauteilen zu haben.
(a), (b) und (c) beziehen sich sämtlich auf die Tatsache, dass die Aufbringung des Klebstoffs auf dem Kontakt zwischen der Auftrageinheit und dem Streifen beruht.
d. Die mittels einiger Klebetechniken hergestellten Pakete können variable / unzuverlässige Festigkeiten des Pakets aufweisen.
e. Die Kosten von Werkzeugen mit integrierten Auftrageinheiten können wesentlich höher als die von Standardwerkzeugen sein.
f. Die Technologie des in ein Werkzeug integrierten Auftragsystems kann normalerweise nicht bei bereits vorhandenen Werkzeugen angewandt werden.
g. Bei einem anderen bekannten Verfahren (EP 1 833 145 A2) wird sehr erfolgreich berührungslos mit einem Auftragskopf pro partieller Verbindung, ein Lamellenstapel erzeugt. Eine Einschränkung für dieses Verfahren ist der limitierte Klebstoff, der für dieses Verfahren zur Verfügung steht. Dieser Klebstoff bildet keine langfristige Verbindung der Lamellen unter den thermischen Bedingungen eines üblichen Einsatzbereichs eines solchen Lamellenpaketes. Da die Lamellen untereinander nur partiell mit dem Klebstoff verbunden sind, kann keine hohe Festigkeit garantiert werden. Außerdem können in einigen Fällen Schwingungen zwischen den Lamellen nicht unterbunden werden.
h. Als Beispiele zur Herstellung von Blechpakten mit Klebstoffen seien weiterhin folgende Druckschriften genannt: WO 2010/109272, FR 2 361 767, FR 2 888 390, JPH05304037, JP4648765B und JP2003033711.

### Allgemeine Beschreibung der Erfindung

6. Die Erfindung wird durch die Merkmale des Verfahrensanspruchs 1 definiert. Die abhängigen Ansprüche definieren vorteilhafte Ausgestaltungen der Erfindung. Die Erfindung ermöglicht, Lamellenpakete höchster Festigkeit als integrierten Teil der Pressenoperation bei wirtschaftlich konkurrenzfähigen Geschwindigkeiten herzustellen.

7. Bei dieser Erfindung wird das einlaufende Material einer Ausgleichswalze, dann einer Zuführung, dann der Presse und dann dem Werkzeug zugeführt. Das Ausgangsmaterial des Prozesses wird üblicherweise in Form von Coils geliefert, jedoch ist es auch möglich, geschnittene Streifen bestimmter Länge zu verwenden. Jede Materialdicke, die von einer Presse gestanzt werden kann, kann beim Einsatz dieser Technik gefügt werden. Insbesondere dünne Werkstoffe, üblicherweise mit weniger als 0,5 mm Dicke, profitieren vom Einsatz des Klebens als Fügetechnik wegen der Verringerung der Genauigkeit der Werkzeuge und Maschinen, die normalerweise für diese dünneren Werkstoffe erforderlich ist.

Mit dem Verfahren können Werkstoffe unterschiedlicher Qualität, Dicke, Eigenschaften und Beschichtung verarbeitet werden. Es ist sogar möglich, Werkstoffe unterschiedlicher Qualität, Dicke, Eigenschaften und Beschichtung in demselben Paket zusammenzufügen.

8. Bei diesem Produkt werden vorzugsweise Klebstoffe eingesetzt, die nach vollständiger Aushärtung langfristig bei Temperaturen über 80°C, teilweise sogar über 180°C eine ausreichende Festigkeit ermöglichen.

9. Vorzugsweise werden radikal aushärtende Klebstoffsysteme verwendet, um bei der Herstellung eine schnelle Aushärtereaktion zu erzielen. Hier werden vorzugsweise Methacrylat Klebstoffe verwendet, die durch ein 2 Stoff-System aushärten, wobei eine Komponente aus Harz besteht, im wesentlichen bestehend aus Ethylmethacrylate und/oder Methylmethacrylate und/oder Isobornylmethacrylate und selbstständig nicht oder etwas langsamer aushärtet, und einer Härterkomponente, dem Initiator, im Wesentlichen bestehend aus Peroxide mit einem Vernetzer, bestehend beispielsweise aus trifunktionellem Ester, und einem Beschleuniger, bestehend beispielsweise aus tertiären Anilin-Derivaten. Dieser Initiator baut sich nur begrenzt in die Klebstoffmatrix ein und kann daher nur in geringen Mengen vorliegen. Meist reicht schon ein Kontakt ohne echte Durchmischung beider Komponenten, um eine ausreichende Aushärtereaktion zu erzielen, da beim Kontakt des Initiators mit dem Klebstoff einzelne Radikale aus dem Initiator mit dem Klebstoff reagieren und durch diese Reaktionen unter bestimmten Umständen eine ganze Kette von weiteren Reaktionen innerhalb des Klebstoffes ausgelöst werden. Die Vernetzer tragen vor allem zu der höheren Temperaturstabilität von vorzugsweise dauerhaft über 180°C bei. Die Vernetzer selbst können im Initiator als auch im Klebstoff enthalten sein.

10. Der Klebstoff kann aber auch ein anaerobes System aus Harz und Härter sein, bei dem das Harz Dimethacrylsäureester und der Härter bzw. Initiator gelöste Metallionen enthält, wobei das Harz unter Sauerstoffabschluss in Kombination mit den Metallionen ebenfalls durch eine radikalische Reaktion vernetzt.

11. Der Klebstoff kann aber auch eine Kombination aus den beiden oben genannten Harz- und Härtersystemen sein (9+10), wobei dadurch die Aushärtereaktion beschleunigt und die thermische Beständigkeit nochmals verbessert werden können.

12. Bei diesem Prozess wird der Initiator partiell in flächigen Bereichen oder vollflächig auf die obere und/oder untere Seite des Streifens berührungslos aufgesprüht oder aufgedampft oder berührend gestempelt, gewalzt, gerollt oder mit einem anderen flächigen Auftragsverfahren aufgebracht. Die Menge und somit die Schichtstärke des Initiators wird von der Auftragseinrichtung gesteuert, damit die Aushärtereaktion beschleunigt und/oder die Eigenschaften der späteren Klebverbindung optimal eingestellt werden können.

13. Der Klebstoff selbst wird als Tropfen berührungslos in Form von einzelnen Tropfen aufgebracht oder partiell in flächigen Bereichen oder vollflächig auf die obere und/oder untere Seite des Streifens berührungslos aufgesprüht oder berührend gestempelt, gewalzt oder gerollt. Allerdings wird der Klebstoff vorzugsweise auf die andere Seite des von Initiator benetzten Bandmaterials aufgebracht, kann aber auch auf derselben Seite aufgebracht werden.

14. Bei einem vollflächigen Auftrag des Klebstoffs wird dieser vorzugsweise unmittelbar vor dem Herauslösen der Lamelle aus dem Materialstreifen aufgebracht, um die Verschmutzung des Werkzeugs mit Klebstoff zu minimieren und um insbesondere durch die räumliche Trennung den Kontakt mit dem Initiator und damit eine Aushärtereaktion zu vermeiden.

15. Es ist aber auch möglich, den Klebstoff zuerst aufzubringen und den Initiator auf der gegenüberliegenden Seite nachträglich aufzubringen, dann aber bevorzugt berührungslos oder/und direkt auf den Klebstoff zu sprühen, unmittelbar und innerhalb von wenigen Sekunden bevor das Fügen mit der benachbarten Lamelle erfolgt und damit bevor erste Reaktionen im Klebstoffsystem zu weit fortgeschritten sind.

16. Der Klebstoff kann vor oder nach dem Werkzeug mit einer externen Ausrüstung oder innerhalb des Werkzeugs selbst mittels eines integrierten Systems aufgebracht werden. Es gibt verschiedene Möglichkeiten, wo genau der Klebstoff aufgetragen wird. Es ist beispielsweise auch möglich, den Initiator im Werkzeug aufzubringen und die Lamellen außerhalb der Stanzanlage zu lagern oder direkt weiter zu verarbeiten, indem diese auch außerhalb der Stanzanlage mit Klebstoff benetzt und in einer separaten Spannvorrichtung verklebt werden.

17. Beim Prozess im Werkzeug wird der Streifen in einzelne Lamellen gestanzt. Das Lamellenpaket wird in der Matrize zusammengefügt. Der Druck des Stempels aus der letzten Stanzung und eine Bremse gewährleisten eine gute Verbindung zwischen den Lamellen. Dieser hohe Druck ist für eine gleichmäßige Aushärtung des Klebstoffs wesentlich, die ihrerseits eine gleichmäßige Paketfestigkeit über die Lamellen liefert.

18. Es kann aber auch ein Klebstoff aufgebracht werden, der selbstständig unter Temperatur aushärtet, einen Initiator somit nicht zwingend benötigt. Hierbei sind Acrylatklebstoffe, beispielsweise bestehend aus Methacrylsäure und Acrylsäure, oder beispielsweise Epoxid-Harz Klebstoffe wie beispielsweise im Wesentlichen bestehend aus Bisphenol A, oder auch Urethanharz-Klebstoffe geeignet. Dieser wird ebenfalls partiell oder vollflächig auf eine oder beide Seiten der Lamelle aufgebracht. Dieser kann aber auch schon vor dem Stanzprozess in trockener Form auf dem Bandmaterial vorliegen.

19. Der Klebstoff kann aus einem Harz- und Härtersystem bestehen, das erst unter Temperatureinfluss vollständig vernetzt. Das Harz besteht aus Epoxiden, beispielsweise auf Basis von Bisphenol A, Novolaken, ect., und die Härter beispielsweise aus Polyaminoamide, Polyamide, Dicyandiamid, Phenolharze, Carbonsäureanhydride etc., oder aus einem Schmelzklebstoff, der weit über der üblichen Gebrauchstemperatur schmilzt und damit beim Abkühlvorgang verkleben kann, wie beispielsweise Schmelzklebstoff auf Basis Polyamid. Es kann auch ein Klebstoff eingesetzt werden, der beide Klebvorgänge miteinander kombiniert, wie beispielsweise Schmelzklebstoffe auf Basis Polyesterurethanprepolymeren mit eingebauten Isocyanatgruppen.

20. Entscheidend ist aber die Art, mit der der Klebstoff erwärmt wird. Vorzugsweise werden die Lamellen erst nach dem Stanzvorgang in einem Lamellenspeicher partiell oder, wenn das Lamellendesign es erlaubt, vollständig erwärmt und damit verklebt. Bei der partiellen Verklebung kann nachträglich der Lamellenstapel in einem separaten Folgeprozess nochmals erwärmt und verklebt werden. Wenn dies aber im Werkzeug vollständig erfolgen kann, ist das Produkt schon fertig. Eine vollständige Verklebung ist dann möglich, wenn abhängig von der Erwärmungstechnologie das Produktdesign einen Abstand zur Außenkontur von etwa maximal 30 mm nicht übersteigt, da sonst die Bereiche der Außenkontur verbrennen würden und die Bereiche der Innenkontur durch den verhältnismäßig langsamen Wärmeeintrag bzw. Wärmefluss innerhalb des Lamellenstapels zu kalt für eine Verklebung sind. Im Werkzeug kann zur Erwärmung vorzugsweise eine Induktionsspule verwendet werden, die den gesamten Lamellenstapel erwärmt.

21. Hinzu kommt beim Einspannen der Lamellen ein Anpressdruck zur Hilfe, der die Reaktion und das Verbinden des Klebstoffs ergänzend zur Erwärmung unterstützt. Es ist aber auch möglich, den Lamellenstapel mit allen anderen Heizsystemen aufzuwärmen, wie beispielsweise Infrarotstrahlung oder Heizdrähten, die beim Durchfließen von Strom hohe Widerstände aufweisen, dadurch heiß werden und Wärme an das Lamellenpaket abgeben können.

22. Sollte die Verklebung des Lamellenstapels in diesem Schacht nicht endlos erfolgen, kann auf die Oberseite der obersten Lamelle oder auf die Unterseite der untersten Lamelle eine Trennschicht aufgesprüht werden, die eine sehr schlechte Klebstoffbenetzung aufweist, so dass dort keine Verklebung erfolgen kann bzw. dort nachträglich eine einfache Trennung ermöglicht. Oder es kann eine Trennfolie oder ein Abstandshalter eingelegt werden, die ebenfalls eine Verklebung an dieser Stelle verhindern.

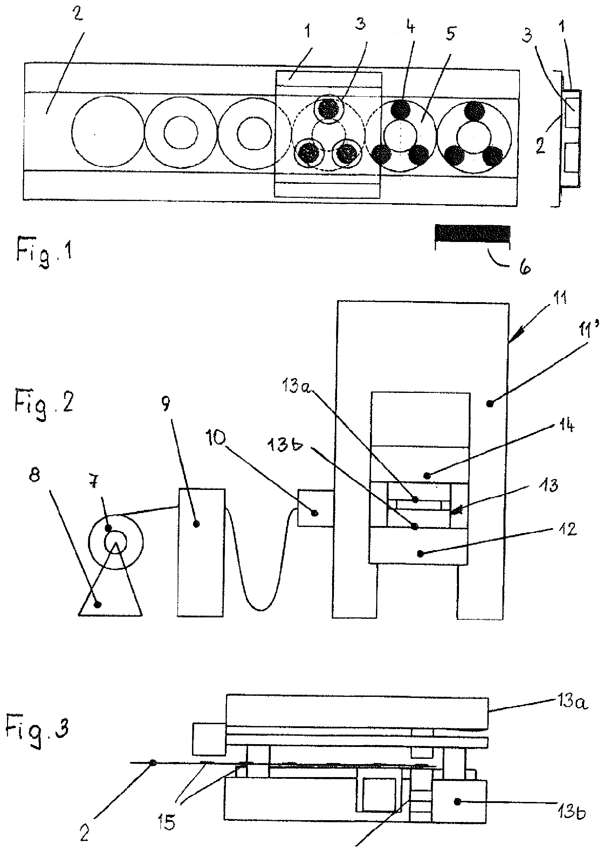

23. Die Erwärmung kann aber auch an der einzelnen fertigen oder teilfertigen Lamelle oder direkt am Materialstreifen erfolgen, indem sehr hohe Energie in kürzester Zeit den Klebstoff auf Reaktionstemperatur bringen kann. Dies erfolgt vorzugsweise durch Induktionsspulen, die in nächster Nähe zur Klebstoffoberfläche platziert sind. Fig. 1 zeigt einen Tunnel 1, durch den der Streifen 2 läuft und an dem die Spulen 3 befestigt werden. In solch einem Tunnel 1 kann der Klebstoff 4 aber auch durch Strahlung, wie Laser, Infrarot oder eine andere Strahlungsquelle, oder Wellen, wie Mikrowellen, schnell erwärmt werden. Ist der Klebstoff partiell oder vollflächig auf der Lamelle 5 so erwärmt, dass er reaktiv ist, wird dieser Bereich beim Trennen der Lamelle aus dem Streifen mit der benachbarten Lamelle gefügt und unter Druck so lange fixiert, bis die Aushärtereaktion ausreichend erfolgt ist.

24. Bei diesem System kann die Trennung der einzelnen Lamellenstapel auch durch kurzzeitiges Abschalten der Wärmequelle erfolgen, indem eine Lamelle für die Aushärtereaktion nicht ausreichend erwärmt wird. Es sind aber auch die in 22. genannten Trennvorgänge denkbar.

25. Denkbar ist aber auch die Kombination von beiden Heizmechanismen, indem beispielsweise der Klebstoff auf der einzelnen Lamelle zunächst erwärmt wird und die Reaktion noch länger aktiv bleibt, indem der Lamellenstapel im gefügten Zustand noch weiter warm und unter Druck gehalten wird.

26. Eine Option ist, die Verteilung des Klebstoffs oder des Initiators so zu steuern, dass sie unterbrochen wird, wenn ein neues Paket angefangen werden soll. Diese Steuerung kann mit der Pressensteuerung verknüpft werden, z.B. so, dass das Verteilen von Klebstofftropfen nach einer festgelegten Anzahl von Stanzhüben verhindert wird. Dies würde die Fertigung von Lamellen ohne Klebstoff ergeben und so den Anfang eines neuen Pakets in der Bremse erleichtern.

27. Ein klarer Vorteil dieser Technik besteht darin, dass sie nicht auf einer physischen Verbindung zum Zusammenfügen der Teile beruht. Daher kann die Drehung aufeinanderfolgender Lamellen unter jedem für das Erzeugnis erforderlichen Winkel erfolgen.

28. Die einzige Geschwindigkeitsbeschränkung, der eine Presse bei Einsatz dieser Technologie unterliegt, sind die Geschwindigkeit des Klebstoffauftragsystems und die Aushärtezeit des Klebstoffs in der Bremse. Eine längere Bremse erlaubt, soweit erforderlich, eine längere Aushärtezeit. Deshalb bietet diese Technologie die Möglichkeit, Pressen mit vergleichbaren oder höheren Geschwindigkeiten zu betreiben als mit anderen Verbindungs-Technologien.

### Kurze Beschreibung der Zeichnungen

29. Zum besseren Verständnis der Beschreibung eines erfindungsgemäßen Ausführungsbeispiels dienen folgende Zeichnungen:
- Fig. 1.: Eine schematische Darstellung eines Induktionskanals mit einer Durchführung für Streifen, aus denen Lamellen gestanzt werden.
- Fig. 2: Eine schematische Darstellung einer Stanzpresse mit einem Werkzeug zur Herstellung von Lamellenstapeln.
- Fig. 3.: Eine schematische Darstellung eines Werkzeuges der Stanzpresse.
- Fig. 4: In schematischer Darstellung eine Steuerung einer Klebstoffauftrageinheit.
- Fig. 5: In vergrößerter Darstellung einen Auftragkopf der Klebstoffauftrageinheit gemäß Fig. 4.
- Fig. 6: In schematischer Darstellung einen Auftragkopf, mit dem auf einer Lamelle eine große Fläche eines Initiators aufgebracht wird.
- Fig. 7: Mehrere Auftragköpfe, mit denen auf einer Lamelle mehrere kleine Flächen von Initiatoren aufgebracht werden.
- Fig. 8: Eine schematische Darstellung einer Anbindung der Klebstoffauftrageinheit an ein Werkzeug,
- Fig. 9: Eine Draufsicht auf einen Streifen, auf den mehrere Punkte eines Initiators aufgebracht sind, im Bereich oberhalb einer Auftragwalze für einen Klebstoff,
- Fig. 10: Eine vergrößerte Darstellung einer Einzelheit in Fig. 9.
- Fig. 11: Eine Ansicht dreier Walzen, die zum Klebstoffauftrag herangezogen werden.
- Fig. 12: Eine Seitenansicht der Auftragwalze für den Klebstoff.
- Fig. 13: Eine Draufsicht auf die Auftragwalze gemäß Fig. 12.
- Fig. 14: In schematischer Darstellung einen Schacht, in dem aufeinanderliegende Lamellen zu einem Lamellenpaket gestapelt werden.
- Fig. 15: Eine schematische Darstellung eines Streifens, aus dem Lamellen gestanzt werden, von denen einige nicht mit einem Initiator versehen sind.

### Beschreibung eines Ausführungsbeispiels der Erfindung im Einzelnen

30. Im Folgenden wird anhand eines Ausführungsbeispieles im Einzelnen diese Technologie erläutert. Die Lamellenpakete werden beispielhaft für Rotoren und/oder Statoren von Elektromotoren eingesetzt.

31. Fig. 2 zeigt eine schematische Darstellung einer Stanzpresse. Auf einem Abwickler 8 befindet sich ein Coil 7 des Ausgangsmaterials. Man erkennt, wie das Material durch eine Ausgleichswalze 9 und dann in eine Vorschubeinrichtung 10 sowie ein Pressengestell 11 einer Presse 11 geführt wird. Das Werkzeug 13 sitzt auf einem Pressentisch 12 und besteht aus zwei Teilen, einem Oberteil 13a und einem Unterteil 13b. Ein oberer Balken 14 der Presse bewegt sich auf und ab, um aus dem streifenförmigen Material 2 Lamellen zu stanzen.

32. Einige weitere Einzelheiten der Anordnung der Schlüsselelemente im Pressengestell sind schematisch in Fig. 3 angedeutet. Bei diesem Beispiel ist die Auftragseinheit für den Initiator an der Vorderseite des Werkzeugs 13 angeordnet und kann entweder am Ober- 13a oder am Unterteil 13b des Werkzeugs 13 befestigt werden. Das Auftragsventil der Auftragseinheit arbeitet berührungslos.

Auf das streifenförmige Ausgangsmaterial 2 wird vor dem Eintritt in das Werkzeug 13 bzw. zwischen dem Oberteil 13a und dem Unterteil 13b der Initiator in Form einer dünnflächigen Schicht 15 durch Sprühtechnik partiell oder vollflächig aufgebracht.

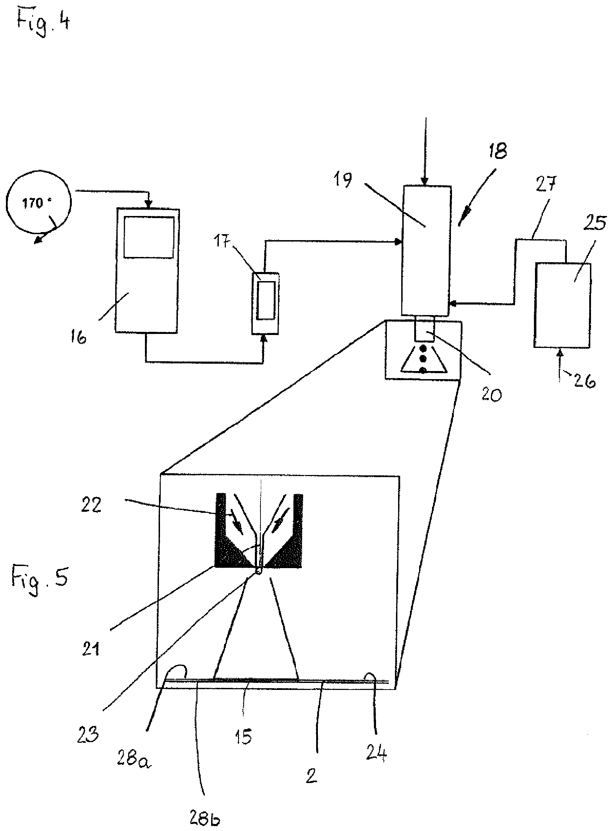

33. Die Presse 11 ist an eine Steuerung 16 (Fig. 4) angeschlossen, die ein Steuersignal pro Pressenhub an eine Steuerung 17 zur Ansteuerung der Auftragsventile in einer Klebstoffauftrageinheit 18 sendet. Das Signal in der Steuerung 17 sendet einen elektrischen Stromimpuls direkt an das jeweilige Ventil 19 der Auftragseinheit 18. Das Ventil 19 für den Initiator öffnet eine kurze, festgelegte Zeit, in der der Initiator unter Druck auf die Streifenoberfläche möglichst gleichmäßig aufgesprüht wird. Dabei entsteht auf dem Streifen 2 die dünnflächige Schicht 15. Der Initiator tritt aus einer Düse 21 in Tropfenform aus (Fig. 5). Die Initiatortropfen 23 werden mit Hilfe von Sprühluft 22 bei ihrem Austritt aus der Düse 21 zerstäubt. Die Düse 21 ist Teil eines Auftragskopfes 20, der wiederum Bestandteil der Auftragseinheit 18 ist. Im Beispiel kann der Auftragkopf 20 von der Streifenoberfläche 24 einen Abstand von etwa 1 bis etwa 100 mm haben. Das Timing des Signals zum Aussprühen ist sehr wichtig. Das Timing ist erforderlich, damit der Initiator während des richtigen Abschnitts des Pressenhubes aufgetragen wird, wenn sich das Streifenmaterial 2 momentan in Ruhe befindet. Damit kann eine gleichmäßige Verteilung und eine genaue Platzierung des Initiators erfolgen. Würde der Initiator während der Vorwärtsbewegung des Bandmaterials 2 aufgebracht werden, müsste die aufgebrachte Menge abhängig von der Vorschubgeschwindigkeit erfolgen, da die Vorschubgeschwindigkeit nicht linear erfolgt.

Der Initiator wird in Behältern 25 benachbart zur Presse 11 gelagert. Wenn die Behälter 25 mit Druck 26 beaufschlagt werden, wird der Initiator aus den Behältern 25 durch wenigstens eine Leitung 27 zu den Auftragsköpfen 20 gefördert, mit denen in der beschriebenen Weise der Initiator auf den Streifen 2 aufgesprüht wird. Die frisch aufgebrachte(n) initiatorfläche(n) 15 (Fig. 4) liegen dann entweder auf der Oberseite 28a oder der Unterseite 28b des Streifens 2, je nach dem, auf welche Seite der Initiator aufgesprüht wird. Vorzugsweise wird er auf die Oberseite 28a des Streifens 2 gesprüht.

Die Steuerung 17 und die Auftragseinheit 18 bilden vorteilhaft ein Auftragssystem. Bei entsprechend benötigter Verteilung gibt es mehr als ein Auftragssystem, um den Initiator auf den Streifen 2 aufzubringen. Für die Auftragseinheiten 18 kommen alle geeigneten Ventilsysteme in Betracht. Welches Ventilsystem auch verwendet wird, es muss gewährleisten, dass der Initiator auf die Sollstellen auf dem Streifen 2 aufgebracht wird.

Die Auftrageinheit 18 muss ihre Signale nicht von der Pressensteuerung 16 erhalten; sie kann ihre Signale auch von einer anderen Steuerung zugeführt bekommen.

Bei mehreren Auftragseinheiten ist es auch möglich, diese von einer gemeinsamen Steuerung 17 aus zu regeln und/oder zu steuern.

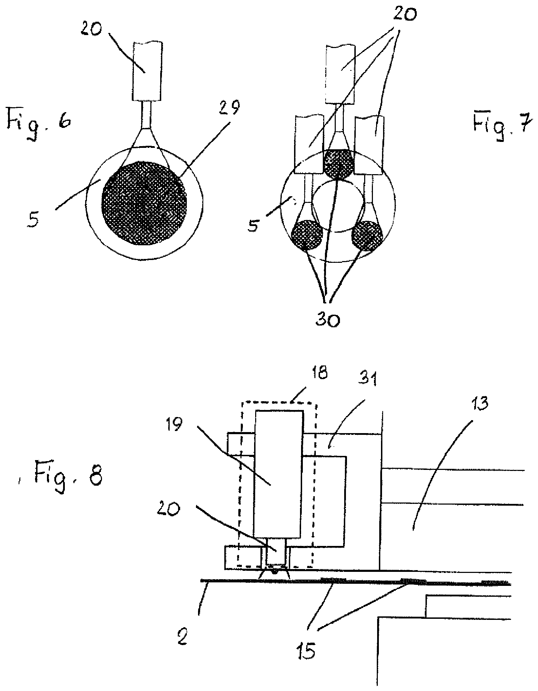

34. Die Anzahl der für eine Lamelle 5 benötigten Auftragsköpfe 20 hängt von verschiedenen Faktoren ab, einschließlich der Größe der Lamelle 5, damit die Stabilität des Lamellenstapels 6 im gesamten Verbund gleichmäßig verteilt ist, und ihrer Form, um die Fixierpunkte möglichst symmetrisch anordnen zu können und damit eine ausreichende Haftkraft zu erreichen (Fig. 6). Dann reicht ein Auftragkopf 20 aus. Wenn beispielsweise größere Flächen 29 benetzt werden sollen, können über diese eine Fläche deutlich höhere Kräfte übertragen werden als über kleinere Flächen. Bei kleineren Flächen 30 werden zur Erreichung derselben Haftkraft mehr Verbindungsstellen und damit mehr Auftragsköpfe 20 benötigt (Fig. 7). Die Auftragseinheit 18, die im Wesentlichen aus dem Auftragskopf 20 und dem Ventil 19 besteht (Fig. 8), wird an das Werkzeug 13 durch eine Stützvorrichtung 31 angeschlossen. Sie verbleibt an dem einzelnen Werkzeug 13 und ist zur Fixierung der Auftrageinheit 18 in der für dieses Werkzeug richtigen Platzierung ausgebildet. Die Auftrageinheit 18 selbst kann jedoch von der Stützvorrichtung 31 gelöst und so mit jedem anderen Werkzeug 13 verwendet werden. Die Auftrageinheit 18 kann auch mit Abstand vor dem Werkzeug 13 oder im Werkzeug 13 angeordnet sein.

35. Beim Durchlaufen des mit dem Initiator benetzten Bandmaterials 2 kann dieses die Werkzeugteile, wie Stempel oder Führungsleisten, berühren, da der vorliegende Initiator, der im Ausführungsbeispiel aus den Derivativen Imine und Methacrylatester besteht und in Kleinstmengen aufgebracht wird, nicht selbstvernetzend wirkt und hauptsächlich aus flüchtigen Stoffen besteht. Darum führt eine Berührung mit dem Initiator nicht dazu, dass das Bandmaterial 2 hängen bleibt.

Wenn der Initiator in flüssiger Form vollflächig und vor dem Werkzeug auf das Bandmaterial aufgebracht wird, wirkt der Initiator wie ein Schmierfilm auf Stempel und Matrize und ermöglicht daher eine deutlich längere Standzeit des Stanzwerkzeuges und erhöht damit die Gesamtausbringung und Lebensdauer dieses Werkzeugs um ein Vielfaches.

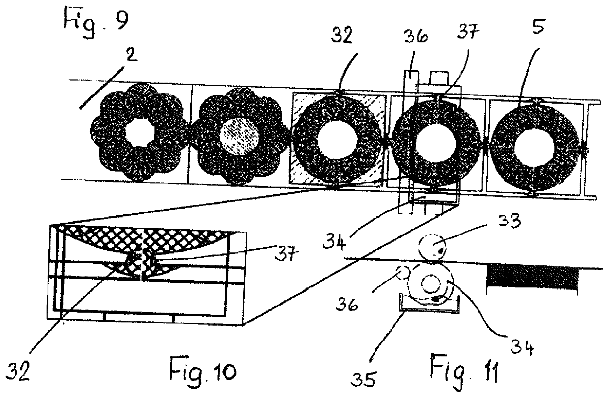

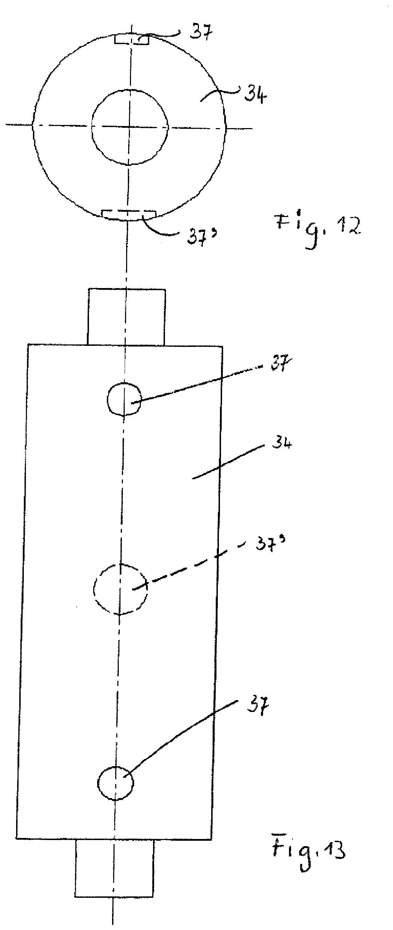

36. Die Lamelle 5 wird in bekannter Weise in mehreren Schritten mit allen erforderlichen Konturen gestanzt. Beim letzten Schritt wird die Lamelle 5 vom Rest des Streifens 2 getrennt. Der Klebstoffauftrag erfolgt direkt vor diesem letzten Schritt, bei dem die Lamelle 5 nur noch mit wenigen schmalen Verbindungsstegen 32 (Fig. 9) an den Streifen 2 fixiert ist. Der Klebstoffauftrag kann durch einen Walzenauftrag erfolgen, bei dem der Streifen 2 durch eine obere 33 und eine untere Walze 34 geführt wird. Die obere Walze 33 dient als Gegenhalt. Die untere Walze 34 ist gummiert und mit Klebstoff benetzt. Diese Benetzung erfolgt nach Fig. 11 durch ein Klebstoffbad 35, in das die Walze 34 eintaucht. Eine dritte Walze 36 mit minimalem Abstand zur unteren Walze 34 ist so eingestellt, dass der aufgenommene Klebstoff 35 an der unteren Walze 34 zum Teil wieder abgeführt und damit die erforderliche Schichtdicke und eine homogene Verteilung des Klebstoffs beim Walzenauftrag ermöglicht wird. Die gummierte Walze 34 hat eine der Vorschublänge des Werkzeugs 13 entsprechende Umfangslänge. In der gummierten Walze 34 sind Bereiche 37, 37' ausgespart (Fig. 12 und 13), die beim Abrollen die Bereiche der Verbindungsstege 32 berühren würden. Durch die Aussparungen 37, 37' werden diese Bereiche nicht benetzt. Wie sich aus Fig. 9 ergibt, ist die Länge der Walzen 33, 34, 36 größer als die Breite der Streifen 2, so dass der Klebstoffauftrag an jeder erforderlichen Lage auf die Unterseite der Lamellen 5 aufgebracht werden kann. Die Aussparungen 37 sind beispielhaft nahe den beiden Enden der Walze 34 auf gleicher axialer Höhe vorgesehen (Fig. 13). Die Aussparung 37' liegt in halber Länge der Walze 34 und, in Achsrichtung der Walze 34 gesehen (Fig. 12), den Aussparungen 37 diametral gegenüber. Die als Vertiefungen ausgebildeten Aussparungen 37, 37' haben im dargestellten Ausführungsbeispiel kreisförmigen Umriss, können aber je nach Art und/oder Form der nicht mit Klebstoff zu benetzenden Bereiche der Lamelle 5 auch einen anderen geeigneten Umriss haben.

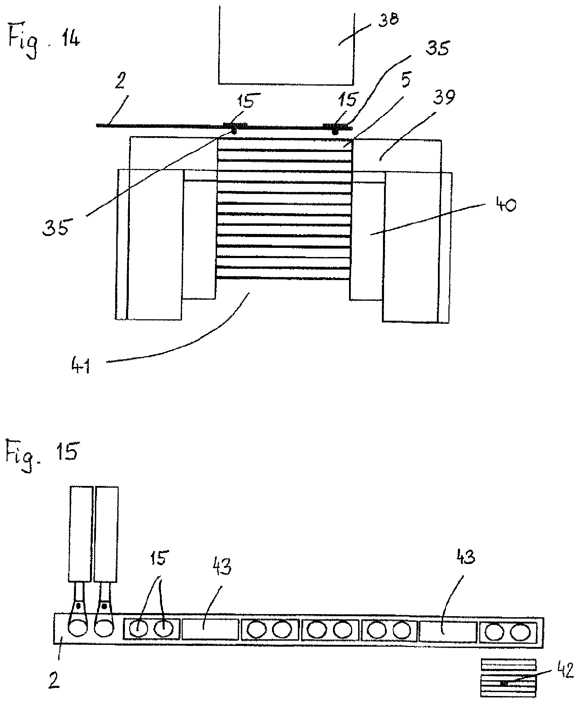

37. Beim letzten Stanzschritt (Fig. 14), bei dem die Lamelle 5 an den Verbindungsstegen 32 vom Bandmaterial 2 getrennt wird, wird die gelöste Lamelle von einem vollflächigen Stempel 38 nach unten in eine Matrize 39 gedrückt, wodurch der Klebstoff 35 an der Unterseite der Lamelle 5 mit dem Initiator 15 an der Oberseite der zuvor getrennten Lamelle 5 in Kontakt kommt. Durch den Kontakt zwischen Initiator 15 und Klebstoff 35 erfolgt die Vernetzungsreaktion, so dass die aufeinander liegenden Lamellen 5 fest miteinander verbunden werden. Die aufeinander liegenden Lamellen 5 werden zunächst durch die Matrize 39 und später durch eine Bremse 40 so lange fixiert, bis der Klebstoff eine ausreichende Anfangsfestigkeit erreicht hat.

38. Die Bremse 40 befindet sich in einem schachtartigen Raum 41, in dem die Lamellen 5 zu Paketen zusammengestellt werden. Die Bremse 40 sorgt dafür, dass die gestanzten Lamellen nicht durch den Schacht 41 nach unten fallen. Die Ausbildung der Bremse ist bekannt und wird darum nur kurz erläutert. Sie kann beispielsweise durch Teilringe gebildet werden, deren Innendurchmesser geringfügig kleiner ist als der Außendurchmesser der gestanzten Lamellen 5. Dadurch werden die Lamellen 5 durch die Bremse 40 im Schacht 41 gehalten. Mit dem Stempel 38 wird nach jedem Stanzvorgang die nächste Lamelle auf die in der Bremse 40 befindliche(n) Lamelle(n) gedrückt. Die von der Bremse 40 ausgeübte Bremskraft ist so groß, dass beim Aufdrücken der jeweils nächsten Lamelle 5 auf den schon gebildeten Teil des Lamellen-Paketes ein Anpressdruck entsteht, der eine sichere Verklebung der aufeinanderliegenden Lamellen 5 gewährleistet. Die von dem Stempel 38 ausgeübte Kraft ist über die Lamelle 5 hinweg gleichmäßig. Daher besteht ein ausgeglichener Kontakt über die Lamellen hinweg sowie ein hoher Druck, der eine gleichmäßige Verbindung begünstigt. Die zum Aushärten verfügbare Zeit ist abhängig von der Anzahl und Dicke der Lamellen 5 und vom Abstand der Matrize 39 bis zum Ende der Bremse 40.

Je länger die Bremse 40 in Längsrichtung des Schachtes 41 ist, desto länger ist die Zeit, in der sich die zusammengedrückten Lamellen 5 in der Bremse 40 befinden. Dadurch steht mehr Zeit zum Aushärten des Klebstoffs zur Verfügung.

39. Bei Anwendung des beschriebenen Beispiels gibt es mehrere Methoden, die gewünschte Lamellen-Paketlänge in dieser Technik zu gewährleisten. Anhand von Fig. 15 wird eine Möglichkeit beschrieben, wie die Zufuhr von Initiator 15 auf den Streifen 2 in festgelegten Intervallen unterbrochen werden kann. Die mit Initiator versehenen Lamellen 5 werden im Schacht 41 (Fig. 14) zum Paket 42 zusammengefügt. In diesem Falle wird die Zufuhr von Initiator 15 zum Streifen 2 in festgelegten Intervallen unterbrochen. Auf diese Weise werden Lamellen 43 erzeugt, die auf ihrer Oberseite 28a keinen Initiator 15 aufweisen. Die Lamellenverbindungen ohne Initiator verkleben nicht oder nicht schnell genug im Schacht 41. Somit kann an dieser Stelle eine Pakettrennung erfolgen. Durch diese nicht mit Initiator versehenen Lamellen 43 wird die Höhe des Lamellen-Paketes 42 bestimmt. Da im Beispielsfall jede vierte Lamelle keinen Initiator aufweist, werden im Schacht 41 Pakete 42 gebildet, die aus vier aufeinander sitzenden Lamellen 5 bestehen. In dem Augenblick, in dem auf die oberste Lamelle 5 des Teilpaketes die Lamelle 43 ohne Initiator 15 aufgedrückt wird, hat das Paket 42 die gewünschte Höhe und wird in bekannter Weise aus dem Schacht 41 später ausgestoßen und einer Transporteinrichtung zugeführt, mit der dieses Paket abtransportiert wird. Nunmehr wird im Schacht 41 das nächste Lamellen-Paket 42 aus vier Lamellen 5 gebildet. Sobald auf dieses Teilpaket die nicht mit Initiator versehene Lamelle 43 aufgedrückt wird, hat das Paket 42 wiederum die gewünschte Höhe und wird später ausgestoßen. Auf diese Weise kann sehr einfach die Pakethöhe bestimmt werden.

Die nicht mit Initiator versehenen Lamellen 43 müssen nicht in gleichmäßigen Zeitintervallen aus dem Streifen 2 gestanzt werden. Der Initiatorauftrag kann so gesteuert werden, dass die Unterbrechung der Initiatorzufuhr in unterschiedlichen Zeitintervallen erfolgt. Dementsprechend ist die Zahl der mit Initiator versehenen Lamellen 43 im Paket 42 in einem Falle größer, im anderen Falle kleiner. Auf diese Weise lässt sich die Höhe des Lamellen-Paketes 42 einfach einstellen.

## Patentansprüche

1. Verfahren zur Herstellung von Lamellenpaketen (42) von kontrollierter Höhe in einem Werkzeug (13), bei dem Lamellen (5) gestanzt werden, auf die Klebemittel (35) aufgebracht und die zum Lamellenpaket (42) zusammengesetzt werden, wobei auf die Lamellen (5) zusätzlich ein Initiator (15) aufgebracht wird, der aus derivativen Iminen und methacrylatischen Estern besteht, die mit dem Klebstoff bei Kontaktierung reagieren und die Klebeverbindung zwischen aneinander liegenden Lamellen (5) herstellen,
**dadurch gekennzeichnet, dass** als Ausgangsmaterial für die Lamellen (5) ein fortlaufender Streifen (2), der in Form eines Coils (7) geliefert wird, aus dem die Lamellen (5) gestanzt werden, oder ein Einzelblech verwendet wird, dass der Klebstoff (35) punktuell auf die eine Seite der Lamelle (5) und der Initiator (15) partiell auf die andere Seite der Lamelle (5) aufgebracht wird, dass der Initiator (15) auf die andere Seite der Lamellen (5) aufgesprüht wird, während sich der Streifen (2) in Ruhe befindet, dass der Initiator (15) vor dem Werkzeug (13) aufgebracht wird, dass für den Austrag des Initiators (15) und des Klebstoffes (35) wenigstens ein Auftragsystem verwendet wird, das eine Steuerung (17) und wenigstens eine Auftrageinheit (18) aufweist, die mit wenigstens einem Auftragkopf (20) versehen ist, der mit einem Ventil (19) für den Initiator (15) versehen ist, an das eine Düse (21) zum Aufsprühen des Initiators (15) angeschlossen ist, wobei die Steuerung (17) pro Pressenhub einen Stromimpuls an das Ventil (19) aussendet, um es zu öffnen, dass die Lamelle (5) in mehreren Schritten mit den erforderlichen Konturen ausgestanzt wird, dass der Klebstoff (35) direkt vor dem letzten Stanzschritt auf die Lamelle (5) aufgebracht wird, dass sich der Initiator (15) begrenzt in die Matrix des Klebstoffes (5) einbaut, dass der Klebstoffverbund durch Wärmezufuhr in einer Matrize (39) und/oder einem folgendem Speicher (41) innerhalb oder einer unmittelbar neben dem Werkzeug (13) nachfolgenden Einheit komplett oder partiell ausgehärtet wird, und dass zur Verhinderung der Verklebung zweier aufeinanderfolgender Lamellenpakete (42) auf die Oberseite der obersten Lamelle (5) oder auf die Unterseite der untersten Lamelle (5) eine Trennschicht mit schlechter Klebstoffbenetzung aufgesprüht wird.

2. Verfahren nach Anspruch 1,
**dadurch gekennzeichnet, dass** die Aushärtereaktion durch den Initiator (15) ausgelöst und/oder beschleunigt wird, der sich nicht unbedingt vollständig mit dem Klebstoff (35) vermischen muss.

3. Verfahren nach Anspruch 1 oder 2,
**dadurch gekennzeichnet, dass** der Klebstoff (35) in Form kleiner Punkte auf die Oberfläche des Streifens (2) in der für die Paketzusammenstellung passenden Position aufgebracht wird, wobei der Klebstoff vorzugsweise in variierenden Mengen und/oder in Form von einer oder mehreren Klebstoffeinheiten dosiert auf die Lamelle (5) aufgebracht wird.

4. Verfahren nach einem der Ansprüche 1 bis 3,
**dadurch gekennzeichnet, dass** die Lamellen (5) während des Aufbaus des Paketes (42) gedreht werden, um gewendelte Pakete in jedem gewünschten Steigungswinkel zu bilden, wobei vorteilhaft Werkstoffe unterschiedlicher Qualität, Dicke, Eigenschaften und Beschichtung verarbeitet werden und/oder vorzugsweise in einer Zusammenstellungskammer (41) für das Lamellenpaket (42) eine Bremse (40) eingesetzt wird.

5. Verfahren nach einem der Ansprüche 1 bis 4,
**dadurch gekennzeichnet, dass** der Initiatorauftrag periodisch unterbrochen wird und in der Zusammenstellungskammer (41) unterschiedlich hohe Pakete (42) zusammengefügt werden, wobei vorzugsweise der Klebstoffauftrag oder Initiatorauftrag durch ein internes oder von außerhalb kommendes Signal unterbrochen wird.

6. Verfahren nach einem der Ansprüche 1 bis 5,
**dadurch gekennzeichnet, dass** der Klebstoffauftrag mittels einer oder mehrerer Sprühköpfe punktuell aufgebracht wird.

7. Verfahren nach einem der Ansprüche 1 bis 6,
**dadurch gekennzeichnet, dass** der Initiator mittels einer oder mehrerer Sprühköpfe (20) partiell aufgebracht wird.

8. Verfahren nach einem der Ansprüche 1 bis 7,
**dadurch gekennzeichnet, dass** die Menge des Initiators (15) und/oder des Klebstoffs (35) variiert und damit die Aushärtegeschwindigkeit und die Eigenschaften des späteren Klebstoffverbundes beeinflusst werden kann.

9. Verfahren nach einem der Ansprüche 1 bis 8,
**dadurch gekennzeichnet, dass** die Erwärmung des Klebstoffs (35) in einem Lamellenspeicher (41) partiell oder vollflächig erfolgt und/oder die Erwärmung des Klebstoffs (35) partiell oder vollflächig vor dem Fügen der Lamellen (5) sehr schnell erfolgt und die Lamellen (5) gefügt werden, wenn der Klebstoff (35) sich noch unter Reaktionstemperatur befindet.

10. Verfahren nach einem der Ansprüche 1 bis 9,
**dadurch gekennzeichnet, dass** einzelne Lamellen (5) vorgewärmt werden und zur Erwärmung des Klebstoffs (35) in einem Lamellenspeicher (41) partiell oder vollflächig nachgewärmt werden und so die Verklebung verbessert wird, wobei vorzugsweise der Haftungsaufbau in der reaktiven und/oder flüssigen Phase des Klebstoffs (35) durch einen Anpressdruck der Lamellen (5) im Lamellenspeicher (41) unterstützt wird.

11. Verfahren nach einem der Ansprüche 1 bis 10,
**dadurch gekennzeichnet, dass** die Erwärmung des Klebstoffs (35) durch eine oder mehrere Induktionsspulen und/oder durch Strahlen und/oder durch Wellen erfolgt, wobei vorzugsweise die Trennung der Lamellenstapel (42) durch eine aufgebrachte Trennschicht erfolgt, die aus einem Trennmittel und oder einer Trennfolie besteht, oder die Trennung der Lamellenstapel (42) durch das kurzfristige Abschalten der Wärmequelle erfolgt und eine oder mehrere Lamellen keine Reaktions- und/oder Haftungstemperatur erreichen können.

12. Verfahren nach einem der Ansprüche 1 bis 11,
**dadurch gekennzeichnet, dass** die Position der Auftragseinheiten des Klebstoffs und Initiators übereinander oder versetzt dem Werkzeug vorgeschaltet und/oder im Werkzeug integriert sind.

13. Verfahren nach einem der Ansprüche 1 bis 12,
**dadurch gekennzeichnet, dass** die Klebstofftropfen mit Hilfe des Initiators bei ihrem Austritt aus der Düse (21) zerstäubt werden.

## Claims

1. A method for producing stacks of laminations (42) of a controlled height in a tool (13), wherein laminations (5) are stamped, to which adhesives (35) are applied and which are put together into a stack of laminations (42), wherein an initiator (15) is additionally applied to the laminations (5), and consists of derivative imines and methacrylate esters, which react with the adhesive upon contact and establish the adhesive bond between adjoining laminations (5), **characterized in that** as base material for the laminations (5) a continuous strip (2) delivered in the form of a coil (7), from which the laminations (5) are stamped, or a single sheet, is used that the adhesive (35) is applied pointwise onto the one side of the lamination (5), and the initiator (15) is applied partially to the other side of the lamination (5), that the initiator (15) is sprayed onto the other side of the laminations (5), while the strip (2) is at rest, that the initiator (15) is applied before the tool (13), that the initiator (15) and adhesive (35) are dispensed using at least one application system that has a controller (17) and at least one application unit (18), which is provided with at least one application head (20) provided with a valve (19) for the initiator (15), to which a nozzle (21) is secured for spraying on the initiator (15), wherein the controller (17) sends out one current pulse to the valve (19) per press stroke so as to open it, that the lamination (5) is stamped out in several steps with the required contours, that the adhesive (35) is applied to the lamination (5) directly before the last stamping step, that the initiator (15) is limitedly integrated into the matrix of the adhesive (5), that the adhesive composite is completely or partially cured through the supply of heat in a die (39) and/or a following storage (41) within or in a following unit located right next to the tool (13), and that a separating layer poorly moistened with adhesive is sprayed onto the upper side of the uppermost lamination (5) or the bottom side of the lowermost lamination (5) to prevent adhesive bonding between two consecutive stacks of laminations (42).

2. The method according to claim 1,
**characterized in that** the curing reaction is triggered and/or accelerated by the initiator (15), which does not absolutely have to be mixed completely with the adhesive (35).

3. The method according to claim 1 or 2,
**characterized in that** the adhesive (35) is applied in the form of small points onto the surface of the strip (2) in the position suitable for putting together the stack, wherein the adhesive is preferably applied to the lamination (5) dosed in varying quantities and/or in the form of one or several adhesive units.

4. The method according to one of claims 1 to 3,
**characterized in that** the laminations (5) are turned while building up the stack (42), so as to form winding stacks in each desired pitch angle, wherein materials having different quality, thickness, properties and coatings are advantageously processed and/or a brake (40) is preferably used in an assembly chamber (41) for the stack of laminations (42).

5. The method according to one of claims 1 to 4,
**characterized in that** the initiator application is periodically interrupted, and stacks (42) of varying height are put together in the assembly chamber (41), wherein the adhesive application or initiator application is preferably interrupted by an internal signal or one coming from outside.

6. The method according to one of claims 1 to 5,
**characterized in that** the adhesive application is applied pointwise by means of one or several spray heads.

7. The method according to one of claims 1 to 6,
**characterized in that** the initiator is partially applied by means of one or several spray heads (20).

8. The method according to one of claims 1 to 7,
**characterized in that** the quantity of initiator (15) and/or adhesive (35) can be varied, making it possible to influence the curing rate and properties of the subsequent adhesive composite.

9. The method according to one of claims 1 to 8,
**characterized in that** the adhesive (35) is heated in a lamination storage (41) partially or completely and/or the adhesive (35) is heated partially or completely vary rapidly before joining together the laminations (5), and the laminations (5) are joined together while the adhesive (35) is still below the reaction temperature.

10. The method according to one of claims 1 to 9,
**characterized in that** individual laminations (5) are prewarmed, and partially or completely rewarmed to heat up the adhesive (35) in a lamination storage (41), thereby improving the adhesion, wherein the adhesive buildup in the reactive and/or liquid phase of the adhesive (35) is preferably supported by a contact pressure of the laminations (5) in the lamination storage (41).

11. The method according to one of claims 1 to 10,
**characterized in that** the adhesive (35) is heated by one or more induction coils and/or through radiation and/or waves, wherein the stacks of laminations (42) is preferably separated by an applied separating layer, which consists of a separating agent and/or a separating foil, or the stacks of laminations (42) is separated by briefly turning off the heat source, and one or several laminations are unable to reach a reaction and/or adhesion temperature.

12. The method according to one of claims 1 to 11,
**characterized in that** the application units of the adhesive and initiator are positioned one over the other or offset upstream from the tool and/or integrated into the tool,

13. The method according to one of claims 1 to 12,
**characterized in that** the adhesive droplets are atomized while exiting the nozzle (21) with the help of the initiator.

## Revendications

1. Procédé pour la production de paquets de tôles (42) d'une hauteur contrôlée dans un outil (13), les tôles (5) sont embouties, appliquées sur les moyens adhésifs (35) et assemblées de manière à former un paquet de tôles (42), un initiateur (15) est également appliqué sur les tôles (5), lequel est constitué d'imines dérivés et d'esters méthacryliques, lesquels réagissent au contact avec la colle et réalisent l'assemblage par collage entre des tôles (5) adjacentes,
**caractérisé en ce qu'**une bande continue (2) est utilisée comme matériau de départ pour les tôles (5), lequel est fourni sous la forme d'un rouleau (7) à partir duquel les tôles (5) sont découpées, ou encore une tôle simple, **en ce que** la colle (35) est appliquée par points sur un côté de la tôle (5) et l'initiateur (15) est appliqué partiellement sur l'autre côté de la tôle (5), **en ce que** l'initiateur (15) est pulvérisé sur l'autre côté des tôles (5), pendant que la bande (2) est au repos, **en ce que** l'initiateur (15) est appliqué avant l'outil (13), **en ce qu'**au moins un système d'application et utilisé pour l'application de l'initiateur (15) et de la colle (35), lequel comporte une commande (17) et au moins une unité d'application (18) pourvue d'au moins une tête d'application (20) dotée d'une soupape (19) pour l'initiateur (15), à laquelle est raccordée une buse (21) pour la pulvérisation de l'initiateur (15), la commande (17) envoyant une impulsion électrique à la soupape (19) à chaque course de presse afin d'ouvrir celle-ci, **en ce que** la tôle (5) est découpée en plusieurs étapes avec les contours souhaités, **en ce que** la colle (35) est appliquée directement avant la dernière étape de découpage sur la tôle (5), **en ce que** l'initiateur (15) s'intègre de façon limitée à la matrice de la colle (5), **en ce que** l'assemblage par collage est durci entièrement ou partiellement par apport de chaleur dans une matrice (39) et/ou dans un réservoir (41) consécutif dans une unité consécutive à l'outil (13) ou directement à côté de celle-ci, et **en ce qu'**une couche de séparation avec une mauvaise application de colle est pulvérisée sur la face supérieure de la tôle (5) du dessus ou sur la face inférieure de la tôle (5) de dessous, pour empêcher l'adhésion entre de paquets de tôles (42) successifs.

2. Procédé selon la revendication 1,
**caractérisé en ce que** la réaction de durcissement est déclenchée et/ou accélérée par l'initiateur (15), lequel ne se mélange pas forcément entièrement avec la colle (35).

3. Procédé selon la revendication 1 ou 2,
**caractérisé en ce que** la colle (35) est appliquées par petits points sur la surface supérieure de la bande (2) dans la position adaptée à l'assemblage des paquets, dans lequel la colle est appliquée sur les tôles (5) en étant de préférence dosée en quantités variables et/ou selon une ou plusieurs unités de colle.

4. Procédé selon l'une des revendications 1 à 3,
**caractérisé en ce que** les tôles (5) sont tournées pendant la constitution du paquet (42), afin de former des paquets hélicoïdaux dans chaque angle d'hélice souhaité, dans lequel des matériaux présentant différentes qualités, épaisseurs, propriétés et différents revêtements sont avantageusement traités et/ou dans lequel un frein (40) est de préférence utilisé dans une chambre d'assemblage (41) pour le paquet de tôles (42).

5. Procédé selon l'une des revendications 1 à 4,
**caractérisé en ce que** l'application d'initiateur est interrompue périodiquement et des paquets (42) de différentes hauteurs sont assemblés dans la chambre d'assemblage (41), dans lequel l'application de colle ou l'application d'initiateur est de préférence interrompue par un signal interne ou venant de l'extérieur.

6. Procédé selon l'une des revendications 1 à 5,
**caractérisé en ce que** l'application de colle est réalisée par points à l'aide d'une ou de plusieurs têtes de pulvérisation.

7. Procédé selon l'une des revendications 1 à 6,
**caractérisé en ce que** l'initiateur est appliqué partiellement à l'aide d'une ou de plusieurs têtes de pulvérisation (20).

8. Procédé selon l'une des revendication 1 à 7,
**caractérisé en ce que** la quantité d'initiateur (15) et/ou de colle (35) est variable, permettant ainsi d'influencer la vitesse de durcissement et les propriétés du futur assemblage par collage.

9. Procédé selon l'une des revendications 1 à 8,
**caractérisé en ce que** le chauffage de la colle (35) est réalisé partiellement ou sur toute la surface dans un réservoir de tôles (41) et/ou le chauffage de la colle (35) est réalisé partiellement ou sur toute la surface très rapidement avant l'assemblage des tôles (5), et les tôles (5) sont assemblées alors que la colle (35) est encore à une température de réaction.

10. Procédé selon l'une de revendications 1 à 9,
**caractérisé en ce que** des tôles (5) séparées sont préchauffées et chauffées de nouveau partiellement ou sur toute la surface dans un réservoir de tôles (41) pour le chauffage de la colle (35), ce qui permet d'améliorer le collage, l'adhérence dans la phase réactive et/ou liquide de la colle (35) étant de préférence renforcée par une pression d'appui des tôles (5) dans le réservoir de tôles (41).

11. Procédé selon l'une des revendications 1 à 10,
**caractérisé en ce que** le chauffage de la colle (35) est assuré par une ou plusieurs bobines d'induction et/ou par des rayons et/ou par des ondes, dans lequel la séparation des piles de tôles (42) est assurée par une couche de séparation appliquée, constituée d'un agent de séparation et/ou d'une feuille de séparation, ou dans lequel la séparation des piles de tôles (42) est assurée par une brève désactivation de la source de chaleur et une ou plusieurs tôles ne peuvent pas atteindre la température de réaction et/ou d'adhésion.

12. Procédé selon l'une des revendications 1 à 11,
**caractérisé en ce que** les positions des unités d'application de la colle et de l'initiateur se situent en amont de l'outil et/ou sont intégrées à l'outil, l'une au-dessus de l'autre ou en décalage.

13. Procédé selon l'une des revendications 1 à 12,
**caractérisé en ce que** les gouttes de colle sont atomisées à l'aide de l'initiateur à leur sortie hors de la buse (21).
